# EUROPÄISCHE PATENTSCHRIFT

(11) **EP 1 984 590 B1**
(45) Veröffentlichungstag und Bekanntmachung des Hinweises auf die Patenterteilung: **09.11.2011**
(21) Anmeldenummer: 06818958.8
(22) Anmeldetag: 01.12.2006
(51) Int. Cl.: E05B 9/08, E05C 19/02, F16B 12/26, E05D 5/02

(54) **VERSPANNBARE BEFESTIGUNGSEINRICHTUNG**
SECURABLE FASTENING DEVICE
DISPOSITIF DE FIXATION SERRABLE

(30) Priorität: 18.02.2006 DE 202006002592 U
(43) Veröffentlichungstag der Anmeldung: 29.10.2008
(73) Patentinhaber: Ramsauer, Dieter, 58332 Schwelm (DE)
(72) Erfinder: Ramsauer, Dieter, 58332 Schwelm (DE)
(74) Vertreter: Stratmann, Ernst
(86) Internationale Anmeldenummer: PCT/EP2006/011568
(87) Internationale Veröffentlichungsnummer: WO 2007/093207

(56) Entgegenhaltungen:
- WO-A-2005/083207
- WO-A-2005/083209
- WO-A-2005/083275
- WO-A1-2005/071199

## Beschreibung

### Hintergrund der Erfindung

Die Erfindung betrifft eine verspannbare Befestigungseinrichtung zur Montage von Beschlägen oder anderen Gegenständen in einem sich gegenüberliegende Kanten oder Wände aufweisenden Durchbruch oder Einsenkung, wie rechteckiger Durchbruch oder Ausnehmung in einer dünnen bzw. dicken Wand, wie Metallblech oder Holzbrett, umfassend ein auf der einen äußeren Seite der dünnen oder der dicken Wand anzuordnenden, den äußeren Rand des Durchbruchs oder der Einsenkung überdeckendes Kopfteil, von dem in montierter Stellung ein den Durchbruch durchragender oder in die Einsenkung hineinragender Fußteil ausgeht, von dem in Richtung seiner Außenfläche in einem im Fußteil gebildeten Kanal gegen oder mit Federkraft zueinander verschiebliche Halteelemente vorspringen, deren freies Ende eine Schrägfläche zur spielfreien Abstützung des Fußteils auf dem Rand oder Kante des Durchbruchs der anderen, inneren Seite der dünnen Wand oder schräg angeordnete Spitzen zum Eindringen in die Wandfläche des Durchbruchs oder der Einsenkung der dicken Wand angeordnet sind, wobei Fußteil und Halteelement zwei getrennte Teile sind, wobei die Halteelemente durch eine vorzugsweise konisch geformte Schraube verschieblich sind.

### Stand der Technik

Eine verspannbare Befestigungseinrichtung zur Montage von Beschlägen oder anderen Gegenständen in einer sich gegenüberliegende Kanten aufweisenden Durchbruch in einer dünnen Wand, wie Metallblech, ist bereits aus der WO 2005/083209 A1 bekannt, siehe dort die Fig. 26A und 26B mit zugehöriger Beschreibung auf Seite 22, Absatz 1. Bei der bekannten Anordnung werden durch eine konische Schraube 98 zwei Halteelemente 736 auseinander gedrückt, wodurch sich eine besonders große Haltekraft ergibt, wobei jedoch der Schraubkopf nur vom Inneren des Schrankes her zugänglich ist und eine Blindbefestigung damit ausscheidet. Entsprechendes offenbart auch die WO 2005/071199 A1.

### Aufgabe der Erfindung

Aufgabe der Erfindung ist es, die bekannte Befestigungseinrichtung weiter auszugestalten und universeller einsetzbar zu machen.

### Lösungswege

Gelöst wird die Aufgabe dadurch, dass die Halteelemente nebeneinander oder - alternativ - hintereinander angeordnete, in Verschieberichtung langgestreckte Platten sind, die gemeinsam oder alternativ allein mit den Kanalwänden einen in Verschieberichtung sich erstreckenden Aufnahmeraum für eine Druckfeder bilden, der sich bei Verschiebung der Platten aus Ihrer Ruhestellung verkleinert und dadurch die Feder zusammendrückt, des weiteren dadurch, dass die konisch geformte Schraube(n) einen konisch geformten Fuß aufweist, und dass die Platten nahe ihrem jeweils einem Ende der Längserstreckung einen mit dem konischen Fuß der Schraube zusammenwirkende erste innere Schrägflächen aufweisen, die in Ruhestellung der Platten zueinander versetzt sind, bei Verschiebung in die Arbeitstellung sich jedoch voneinander entfernen.

Dadurch, dass bei einer dünnen Wand durch die in Verschieberichtung langgestreckten Platten gemeinsam eine in Verschieberichtung sich erstreckender Aufnahmeraum für eine Feder bilden, der sich bei Verschiebung der Platten aus ihrer Ruhestellung verkleinert, und dabei die Feder zusammendrücken, kann erreicht werden, dass die Befestigungseinrichtung einfacher montierbar und demontierbar ist, weil durch den Federdruck die langgestreckten Platten bei Lösen der Schraube automatisch sich zurückziehen bzw. vorschieben, ohne dass besondere Maßnahmen dafür getroffen werden müßten. Außerdem ist die Kombination der Platten mit der Feder wie ein Einzelteil handhabbar und dadurch die Montage der Befestigungseinrichtung als solche zu einer Einheit einfacher.

Dadurch, dass die konische Form der Schraube einen konisch geformten Fuß aufweist, wird sie insgesamt kürzer und man kann dadurch die Bauhöhe der verspannbaren Befestigungseinrichtung reduzieren.

Dadurch, dass die Platten nahe ihrem jeweils einen Ende der Längserstreckung einen mit dem konischen Fuß der Schraube zusammenwirkende erste innere Schrägfläche aufweisenden, die in Ruhestellung der Platten nur wenig zueinander versetzt sind, nach Verschiebung in die Arbeitsstellung sie jedoch voneinander entfernen, kann erreicht werden, dass durch Kraft der Schraube eine besonders stabile Verbindung und Verspannung der Befestigungseinrichtung mit der dünnen Wand erreichbar ist, bzw. der Befestigungseinrichtung mit der dicken Wand. Die feste Verspannung ermöglicht auch eine Verstellbarkeit in Längsrichtung oder ggf. auch in Querrichtung zu dem Beschlag, wie es beispielsweise bei Scharnieren gewünscht werden kann. Das ist bei anderen, z. B. bei den in der Druckschrift beschriebenen Befestigungseinrichtungen nicht gegeben, bei denen eine spielfreie formschlüssige Verbindung zwischen Fußteil und Durchbruch hergestellt wird, die eine Verstellbarkeit nicht ermöglicht.

Außerdem erlaubt die erfindungsgemäße Konstruktion eine Anordnung, bei der eine Blindmontage möglich wird.

Ein noch weiterer Vorteil ist der, dass die Anordnung gemäß der Erfindung in der Öffnungsstellung bleibt, wenn z. B. mehrere Scharniere gleichzeitig in Lösestellung gebracht werden müssen, um das Türblatt aus dem Rahmen entfernen zu können.

Ein weiterer Vorteil der erfindungsgemäßen Anordnung ist schließlich der, dass mit einfachen Mitteln automatisch eine Erdung erreicht werden kann, d. h. eine metallische Verbindung zwischen dem metallischen Scharnier oder sonstigen Beschlagteilen einerseits und der metallischen Wand andererseits.

Gemäß einer Weiterbildung der erfindungsgemäßen Befestigungseinrichtung, bei der eine dünne Wand vorgesehen ist, weisen die Platten nach ihrem jeweils anderem Ende der Längserstreckung einen mit der Kante des Durchbruchs in der dünnen Wand zusammenwirkende äußere Schrägfläche auf, die in Ruhestellung der Platten zueinander innerhalb des Fußteils liegen, bei Verschiebung in die Arbeitsteilung sich jedoch aus dem Rumpfteil hinaus und voneinander weg bewegen. Alternativ können bei der dicken Wand die Platten an dem jeweils anderen Ende der Längserstreckung einen mit der Wand des Durchbruchs oder Einsenkung in der dicken Wand zusammen wirkende äußere Schrägflächen oder Zähne aufweisen, wobei in Ruhestellung der Platten zueinander diese innerhalb des Fußteils liegen, bei Verschiebung in die Arbeitsstellung sich jedoch aus dem Fußteil hinaus und voneinander weg bewegen.

Die Platten können jeweils eine zweite innere Schrägfläche bilden, die sich derart an die erste anschließt, dass beide einen den konischen Bereich der Schraube aufnehmenden Freiraum bilden. Dadurch wird eine besonders einfache und stabile Konstruktion ermöglicht.

Die Schraube kann eine Madenschraube sein, was den Platzbedarf reduziert und zu besonders kleine Ausführungsformen für die Befestigungseinrichtung ermöglicht.

Die Schraube kann in einer vom Kopfteil gebildeten Gewindebohrung angeordnet sein. Alternativ kann die Schraube in einer vom Fußteil gebildeten Gewindebohrung angeordnet sein.

Es ist günstig, wenn gemäß einer Weiterbildung der Erfindung die Endschrägen der Halteelemente derart bezüglich der Wandebene geneigt sind, dass bei senkrecht zur Wandebene von dieser weg gerichteten Kraftkomponente die Halteelemente gegen die Federkraft in eine Richtung parallel zu der Wandebene verschoben werden, in welchem Falle der Winkel annähernd 45 Grad beträgt und keine Selbsthemmungserscheinungen auftreten. Alternativ kann die Endschrägung der Halteelemente derart bezüglich der Wandebene geneigt sein, dass bei senkrecht zur Wandebene von dieser weg gerichteten Kraftkomponente die Halteelemente gegen die Federkraft nicht verschoben werden können, in welchem Falle der Winkel wesentlich kleiner als 45 Grad ist und Selbsthemmungserscheinungen eine Rolle spielen.

Eine rechteckige Hilfsplatte kann vorgesehen sein, mit einer rechteckigen Öffnung, die in Längsrichtung und/oder in Querrichtung etwas kleiner ist als die Öffnung in der dünnen Wand. Dadurch werden Verstellmöglichkeiten eröffnet, die insbesondere bei Scharnieranwendungen von Vorteil sein können.

Die mit der Kegelschraube zusammenwirkenden Schrägflächen der zueinander verschieblichen Platten können derart angeordnet sein, dass bei einem Anziehen der Kegelschraube die Platten gegen Federkraft voneinander weg bewegt werden, beim Lösen dagegen mit der Federkraft aufeinander zu bewegt werden. Das erleichtert die Montage und Demontage.

Die mit der Kegelschraube zusammenwirkenden Schrägflächen der zueinander verschieblichen Platten können aber auch derart angeordnet sein, dass ein Anziehen der Kegelschraube die Platten gegen Federkraft aufeinander zu bewegt, beim Lösen dagegen mit der Federkraft voneinander weg bewegt werden. Dies stellt eine Alternative dar.

Die Endschrägen der Halteelemente in einem ersten Bereich können derart bezüglich der Wandebene geneigt sein, dass bei senkrecht zur Wandebene von dieser weg gerichteten Kraftkomponente die Halteelemente gegen die Federkraft verschoben werden, in welchem Fall keine Selbsthemmung auftritt und der Winkel annähernd 45 Grad betragen wird, in einem zweiten Bereich jedoch einen kleineren, zur Selbsthemmung führenden Winkel aufweist. Das erleichtert wiederum die Montage, da eine gewisse Vormontagemöglichkeit besteht.

Es kann auch günstig sein, wenn die zwei Endschrägen der Halteelemente mit ihren unterschiedlichen Neigungen bezüglich der Wandebene derart angeordnet sind, dass beim Herausziehen des Fußteils zuerst der nicht selbsthemmende Bereich und dann erst der selbsthemmende Bereich wirksam werden.

Die Befestigungseinrichtung kann Teil eines Scharniers für eine dünnwandige Tür, wie Metalltür oder für eine dickwandige Tür, wie Holztür sein. Alternativ kann die Befestigungseinrichtung Teil eines Griffes für eine dünne Wand, wie Metallwand oder für eine dicke Wand, wie Holzwand sein. Schließlich ist auch denkbar, dass die Befestigungseinrichtung Teil eines Verschlusses für eine dünne Tür, wie Metalltür oder eine dicke Tür, wie Holzschranktür ist.

Schließlich ist es möglich, dass die Befestigungseinrichtung Teil einer mit Kopf versehenen Einrichtung zur Befestigung einer ersten Wand an einer zweiten dünnen (Metall)wand- oder dicken (Holz)wand dient. Es sei darauf hingewiesen, dass die Schrägen zur Befestigung des Rumpfteils an der dünnen Wand aufgerauht oder geritzt oder gerillt sein können, um teilweise Formschlüssigkeit zu erreichen, oder auch Erdungszwecken zu dienen.

Gemäß einer Weiterbildung der Befestigungseinrichtung ist die Kante des Durchbruchs der dünnen Wand, auf die die Schrägfläche des Befestigungselementes auftrifft, zur Anpassung an die Neigung der Schrägfläche abgeschrägt, um die Flächenpressung zu reduzieren.

Bei Hintereinanderanordnung der Befestigungselemente kann günstigerweise der zwischen ihnen liegende Freiraum zur Anordnung von Beschlageinrichtungen wie Betätigungswelle eines Vorreiberverschlusses genutzt werden.

Bei selbsthemmenden Befestigungselementen ist eine Verfahrensweise möglich, bei der die Schraube mit konisch geformten Bereich nur zum Lösen des Beschlages eingeschraubt wird. In diesem Falle kann die Schraube mit konisch geformten Bereich die Form eines Werkzeuges wie ein einfacher Schraubendreher oder ein (im Falle nicht allzu großer Kräfte) Schraubendreher mit angesetzter Schraube haben.

Statt einer Schraube mit konisch geformtem Bereich kann u. U. auch eine einfache zylindrische Schraube genügen, wenn die dann höhere Flächenpressung nicht stört.

### Kurze Beschreibung der Zeichnungen

Die Erfindung wird anhand von Ausführungsbeispielen näher erläutert, die in den Zeichnungen dargestellt sind.

Es zeigt:
- Fig. 1A: in einer perspektivischen Ansicht eine verspannbare Befestigungseinrichtung in Form eines Scharniers, vor der Montage in einem Durchbruch in einer dünnen Wand;
- Fig. 1B: eine auseinandergezogene Darstellung der verschiedenen Bestandteile der in Fig. 1A dargestellten Scharnieranordnung;
- Fig. 1C: eine Seitenansicht der Scharnieranordnung gemäß Fig. 1A in einer Darstellung, bei der die Platten zurückgezogen sind;
- Fig. 1D: die Anordnung gemäß Fig. 1C, jedoch in einer Axialschnittansicht;
- Fig. 1E: eine Seitenansicht der Anordnung gemäß Fig. 1A bei der die Platten herausgeschoben sind;
- Fig. 1F: die Anordnung gemäß Fig. 1E, jedoch in Axialschnittansicht;
- Fig. 2: in Draufsicht eine dünne Wand mit einem Durchbruch, bei der eine Hilfsplatte ermöglicht, in dem Durchbruch eine Querverstellung vorzunehmen;
- Fig. 3: eine ähnliche Anordnung, bei der jedoch eine Hilfsplatte zur Längsverstellung dient;
- Fig. 4: eine Anordnung, bei der sowohl eine Quer- wie eine Längsverstellung
- Fig. 5: ermöglicht wird; eine Darstellung zur Erläuterung der Verstellbarkeit in Längs- und Querrichtung;
- Fig. 6A: eine Seitenansicht einer Scharnieranordnung, bei der eine Hilfsplatte zur Verstellbarkeit führt;
- Fig. 6B: eine axiale Schnittansicht der Anordnung gemäß Fig. 6A;
- Fig. 7 und 8: eine vergrößerte Darstellung der Anordnung gemäß Fig. 6B, um deren Funktion näher zu erläutern, wobei in Fig. 7 die Hilfsplatte nicht verspannt ist, in Fig. 8 jedoch die Hilfsplatte verspannt dargestellt ist;
- Fig. 9A und 9B: eine Anordnung in axialer Querschnittsansicht, bei der federgestützte Halteelemente mittels Kegelschraube gegen Federdruck zugezogen werden können;
- Fig. 10A, 10B, 10C und 10D: eine Anordnung, bei der eine federgestützte Gruppe von Halte- oder Klippselementen zur Vormontage vorgesehen sind, wobei keine Selbsthemmungskräfte auftreten, nachträgliches Eindringen der Kegelschraube verspannt die Elemente und erlaubt größere Belastung, so wie beispielsweise bei einer Autotür;
- Fig. 11A, 11B und 12A, 12B: Seitenansichten bzw. axiale Schnittansichten durch eine Ausführungsform, bei der die Schraubenanordnung auf der Vorderseite erfolgt, so dass eine Blindmontage möglich ist;
- Fig. 13: in einer Schnittansicht eine Ausführungsform, die für dicke Wände geeignet ist;
- Fig. 14: die beiden zugehörigen durch eine Schraube gegen Federkraft verspannbaren Platten;
- Fig. 15: nach Montage der Einheit aus Platten und Feder;
- Fig. 16: das zugehörige Beschlagteil, hier beispielsweise ein Griff, Fig. 14 bis 16, jeweils in perspektivischer Darstellung;
- Fig. 17A: eine Ausführungsform einer Befestigungseinrichtung, bei die (selbsthemmenden) Befestigungselemente hintereinander angeordnet sind und der zwischen ihnen liegende Freiraum zur Anordnung einer Betätigungswelle eines Vorreiberverschlusses genutzt ist; und
- Fig. 17B und 17C: eine Ausführungsform ähnlich der Fig. 17A, jedoch mit nicht selbsthemmenden Befestigungselementen, bei Fig. 17B in Klemmstellung, bei Fig. 17C in Lösestellung.

### Ausführliche Beschreibung der Erfindung

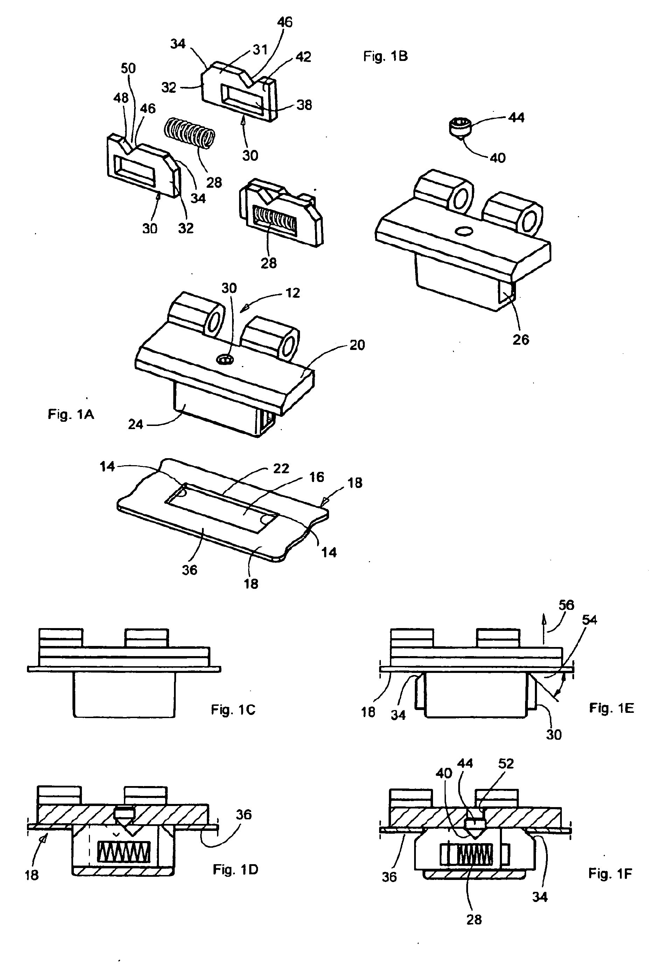

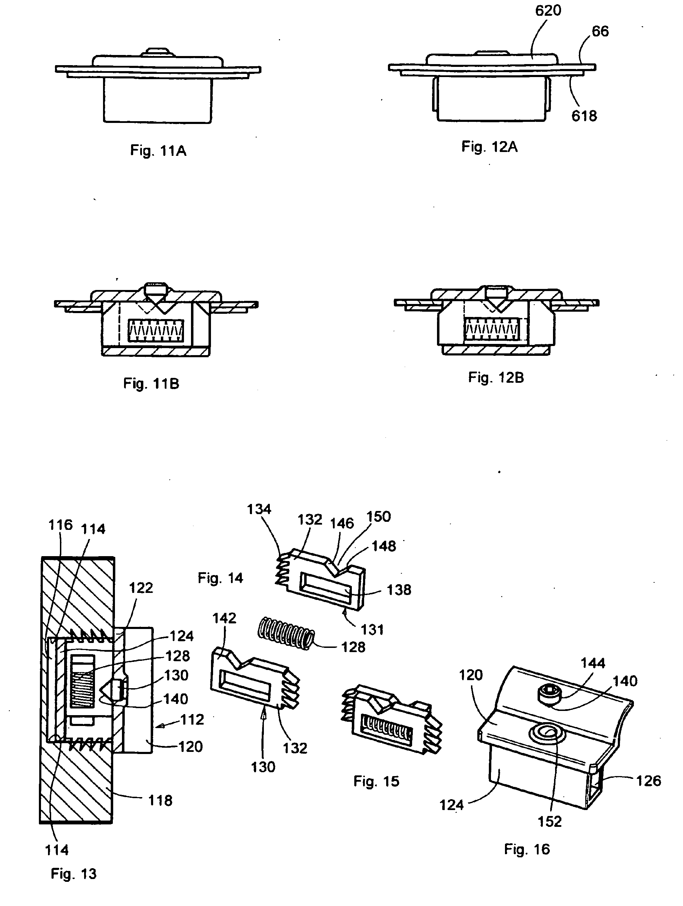

Fig. 1A zeigt in einer perspektivischen Darstellung eine erfindungsgemäße verspannbare Befestigungseinrichtung 10 zur Montage eines Beschlages, wie Scharnier 12 in einer sich gegenüberliegenden Kanten oder Wände 14 aufweisenden Durchbruch 16 in einer dünnen Wand 18, oder alternativ, siehe Fig. 13 zur Montage in einen sich gegenüberliegenden Wände 114 aufweisenden Einsenkung oder Durchbruch 116 in einer dicken Wand 118, wobei die dicke Wand ein Holzbrett sein kann, oder die dünne Wand ein Metallblech. Die Befestigungseinrichtung umfaßt ein auf der einen, äußeren Seite der dicken oder dünnen Wand 118, 18 anzuordnenden, den äußeren Rand des Durchbruchs oder Einsenkung 22, 122 überdeckendes Kopfteil 20, 120, von dem in montierter Stellung ein in die Einsenkung hineinragender oder ein den Durchbruch durchragendes Fußteil 124, 24 ausgeht, von welchem Fußteil 24, 124 in einem Kanal 26, 126 geführte, zueinander gegen oder mit Federkraft 28, 128 zueinander verschiebliche Halteelemente 30, 130, 31, 131 vorspringen, deren freies Ende 32, 132 eine Schrägfläche 34 bzw. schräg angeordnete Spitzen 134 zur spielfreien Abstützung des Fußteils 24 und damit des Kopfteils 20 auf dem Rand oder Kante 22, 14 des Durchbruchs 16 auf der anderen, inneren Seite 36 bzw. zum Eindringen der Spitzen 134 in die Wandfläche 136 der Einsenkung in der dicken Wand 118. Wie zu erkennen ist, sind Fußteil 24 bzw. 124 und Halteelement 30 bzw. 130 getrennte Teile, wobei die Halteelemente 30, 130 durch eine konisch geformte Schraube 38, 138 längs dem Kanal 26, 126 verschieblich sind. Wie die auseinandergezogene Ansicht gemäß Fig. 1B erkennen läßt, siehe auch die entsprechende Fig. 14, sind die Halteelemente 30, 130 nebeneinander angeordnete, in Verschieberichtung langgestreckte Platten, die gemeinsam eine in Verschieberichtung sich erstreckenden Aufnahmeraum 38, 138 für eine Druckfeder 28 bzw. 128 bilden, welcherAufnahmeraum38, 138 sich bei Verschiebung der Platten 30, 130 aus Ihrer Ruhestellung verkleinert und dadurch die Feder 28, 128 zusammendrückt, wie in Fig. 1F bzw. 13 erkennbar wird. Die konisch geformte Schraube 44, 144 weist einen konisch geformten Fuß 40, 140 auf, wobei der Konuswinkel beispielsweise 2 x 45 oder 90 Grad ausmacht, aber bei Bedarf auch einen anderen Winkel bilden kann. Die plattenförmigen Halteelemente 30, 130 besitzen nahe ihrem jeweils einem Ende der Längserstreckung, Bezugszahl 142, einen mit dem konischen Fuß 40, 140 der Schraube 44, 144 zusammenwirkende erste innere Schrägflächen 46, 146, die in Ruhestellung der Platten 30, 130 nur wenig zueinander versetzt sind, bei Verschiebung in die Arbeitstellung sich jedoch unter Wirkung der konischen Fläche der Schraube voneinander entfernen, vergleiche die Fig. 1D und 1F.

Die Platten weisen nahe ihrem jeweils anderem Ende der Längserstreckung 32 bzw. 132 einen mit der Kante 14 der dünnen Wand 18 zusammenwirkende äußere Schrägflächen 34 auf, die in Ruhestellung der Platten 30, 130 zueinander innerhalb des Kanals 26 des Rumpfteils 24 liegen, dargestellt in Fig. 1C und 1D, bei Verschiebung in die Arbeitstellung sich jedoch aus dem Kanal 26 des Fußteils 24 hinaus und voneinander weg bewegen, wie in Fig. 1E und 1F erkennbar. Diese Bewegung drückt die Feder 28 zusammen, so dass bei Lösen der Schraube die Bewegung zurück durch Federkraft ausgeführt wird und die Platten wieder in dem Kanal verschwinden, was eine Bewegung ausführt, die von der Darstellung der Fig. 1E oder 1F zur Position der Darstellung Fig. 1C und 1D führt. Das hat den Vorteil, dass bei Verwendung beispielsweise als Scharnier, wie in den Figuren dargestellt, durch Lösen der Schraube 44 automatisch sich die Halteelemente zurückziehen und so keine besondere Maßnahmen getroffen werden, um die Halteelemente in dieser zurückgezogenen Stellung zu bewahren und dadurch das Herausnehmen einer Tür aus seinen Scharnieren zu erleichtern.

Die Platten oder Halteelemente 30, 130 weisen auch eine zweite innere Schrägflächen 48 bzw. 148 auf, die sich derart an die erste innere Schrägfläche 46, 146 anschließt, dass beide einen den konischen Bereich, hier konischen Fuß 40, 140 der Schraube 44, 144 aufnehmenden Freiraum 50, 150 bilden. Zweckmäßigerweise ist der Freiraum so gestaltet, dass er den Konusbereich 40 der Schraube 44 spielfrei aufnehmen kann. Auch sind die beiden Durchbrüche 38 der nebeneinander liegenden Platten 30 so angeordnet, dass sie in Ruhestellung die beiden dreieckförmigen Einschnitte 50 noch einen kleinen gemeinsamen dreieckförmigen Bereich 52 übrig lassen, in die die Spitze der konischen Schraube 40 eindringen kann, wie in Fig. 1D zu erkennen ist. Wird die Schraube dann weiter angezogen, dringt sie tiefer ein und schiebt die beiden Halteelemente auseinander, bis eine Verklemmung mit den Randbereichen der dünnen Wand 36 eintritt. Maximale Verschiebung ist erreicht, wenn die konusförmige Schraube 40 die beiden dreieckförmigen Einschnitte zum Fluchten gebracht hat.

Am wenigsten Platz benötigt dabei eine Madenschraube, wie sie in den Figuren bei 130, 30 dargestellt ist, diese Madenschraube ist bei den in Fig. 1A dargestellten Ausführungsformen, wie auch bei der in Fig. 13 erkennbaren Ausführungsform, in einer vom jeweiligen Kopfteil 20, 120 gebildeten Gewindebohrung 52, 152, die in den Kanal 26 des Fußteils 226 sich öffnet, eingeschraubt.

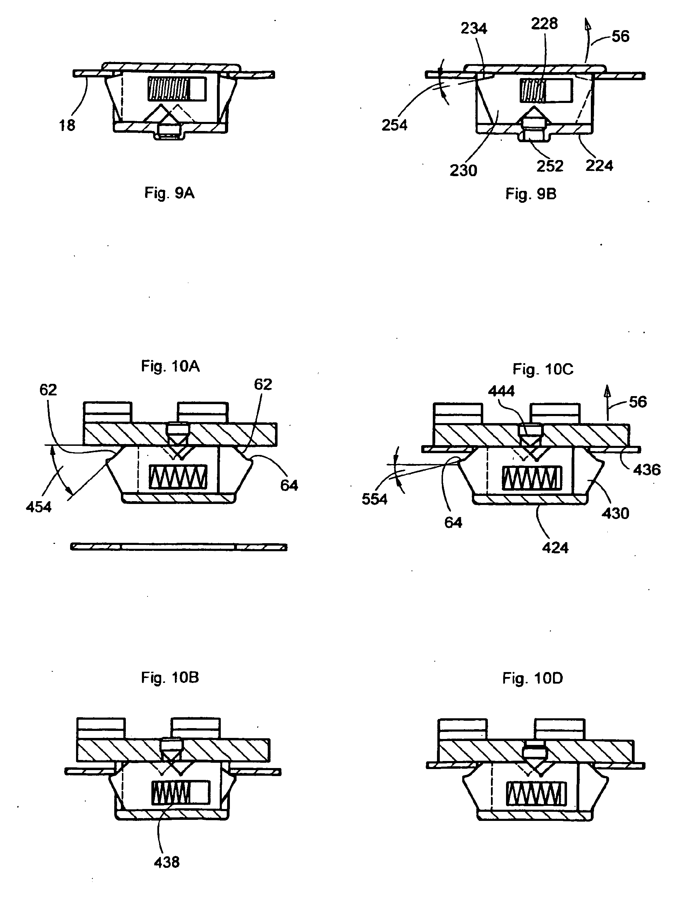

Bei dieser Anordnung ist eine Blindmontage möglich. Falls dies nicht erforderlich ist, kann aber auch die Schraube in einer vom Fußteil gebildeten Gewindebohrung angeordnet sein, diese Möglichkeit ist in Fig. 9A, 9B angedeutet.

Die Endschrägen 34 der Halteelemente 30 können derart bezüglich der Wandebene, siehe die dünne Wand 36 bzw. deren Anlagefläche, angeordnet werden, dass keine Selbsthemmung auftritt. Vorzugsweise sind die Endschrägen 34 der Halteelemente 30 derart bezüglich der Wandebene 18 geneigt, siehe 54 in Fig. 1E, dass bei senkrecht zur Wandebene von dieser weggerichteten Kraftkomponente 56 die Halteelemente 30 gegen die Federkraft 28 in eine Richtung parallel zu der Wandebene verschoben werden, d.h. von der in Fig. 1E dargestellten Stellung in die in 1C dargestellte Stellung zurückweichen. Bei den Winkeln bei 54 tritt also keine Selbsthemmung der Halteelemente innerhalb des Kanals auf, wie es bei wesentlich kleineren Winkeln der Fall wäre. Ein solcher Fall ist in Fig. 9A und 9B dargestellt. Dort sind Endschrägen 234 der Halteelemente 230 derart bezüglich der Wandebene 18 geneigt, siehe den Winkel 254, dass bei senkrecht zur Wandebene von dieser weggerichteten Kraftkomponente 56 die Halteelemente 230 nicht gegen die Federkraft der Feder 228 verschoben werden können, weil Selbsthemmung auftritt, was bei einem Winkel 254 von wesentlich kleiner als 45 Grad, beispielsweise 30 Grad der Fall ist.

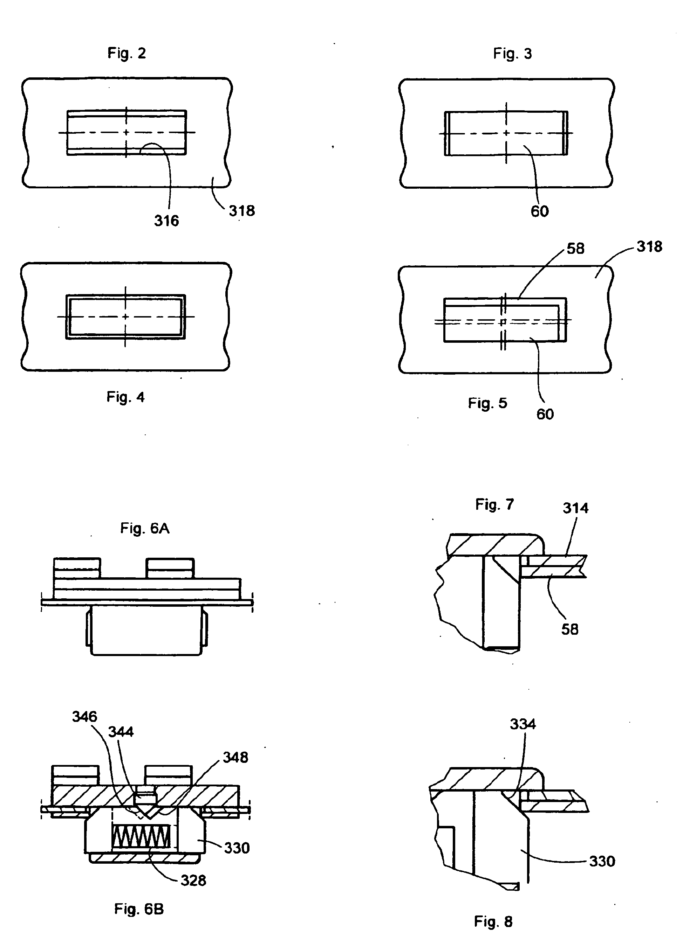

In den Fig. 2, 3, 4 und 5 ist eine Befestigungseinrichtung mit einem Durchbruch 316 in einer dünnen Wand 318 vorgesehen, wobei eine Hilfsplatte 58 vorgesehen ist, mit einer rechteckigen Öffnung 60, die in Längsrichtung (Fig. 3) oder in Querrichtung (Fig. 2) etwas kleiner ist als die Öffnung 316 in der dünnen Wand 318. Gemäß Fig. 4 ist in beiden Richtungen sowohl in Längsrichtung wie in Querrichtung der Durchbruch 60 etwas kleiner.

Wie Fig. 6A erkennen läßt, wird die dünne Wand 318 zwischen dem Beschlagkopf und der Hilfsplatte eingeklemmt, so dass sich die Halteelemente nicht auf die Ränder des Durchbruchs in der dünnen Wand abstützen, sondern auf die der etwas engeren Öffnung in der Hilfsplatte. Das bedeutet, dass der Beschlag innerhalb der Öffnung in der dünnen Wand hin- und hergeschoben werden kann, um beispielsweise beim Scharnier Einstellmöglichkeiten zu erhalten. Diese verschiedenen Verschiebemöglichkeiten sind in Fig. 5 zu erkennen. Nach Anziehen der Schraube sitzt der Beschlag dann fest.

Bei der Anordnung gemäß Fig. 2 ist eine Einstellung quer zur Längserstreckung der Öffnung möglich, bei der Anordnung gemäß Fig. 3 in Querrichtung.

Die mit der Kegelschraube 344 zusammenwirkenden Schrägflächen 346, 348, siehe Fig. 6B, mit zueinander verschieblichen Platten 330 sind derart angeordnet, dass bei einem Anziehen der Kegelschraube 344 die Platten 330 gegen Federkraft voneinander weg bewegt werden, beim Lösen dagegen mit der Federkraft aufeinander zu bewegt werden. Alternativ könnte auch umgekehrt die Einrichtung derart getroffen sein, dass die Platten beim Anziehen der Kegelschraube gegen Federkraft aufeinander zu bewegt werden, beim Lösen dagegen mit der Federkraft voneinander weg.

Bei der Ausführungsform gemäß Fig. 10A, 10B, 10C und 10D ist die Endschrägen der Halteelemente 430 in einem ersten Bereich 62 derart bezüglich der Wandebene 436 geneigt, siehe Bezugszahl 454, dass bei senkrecht zur Wandebene von dieser weggerichteten Kraftkomponente 56 die Halteelemente 430 gegen die Federkraft der Feder 438 verschoben werden können, was z. B. von der Stellung in Fig. 10C zur Stellung in Fig. 10B, wobei die Kanten des Durchbruchs in der dünnen Wand 436 entlang der Schrägfläche gleiten und die Halteelemente gegen die Kraft der Feder 438 eindrücken. Man kann also wohl bei dem herausgedrehten Konus einer Schraube 444 das Scharnier lockern, bis ein zweiter Bereich 64 der Schrägfläche erreicht ist, wie gemäß Fig. 10B, welcher einen kleineren zur Selbsthemmung führenden Winkel 554 aufweist, so dass ein vollständiges Abziehen des Beschlagteils von der dünnen Wand 436 erst dann möglich wird, wenn zusätzlich Druck von außen auf die Halteelemente 430 ausgeübt wird, so dass sie ganz eintauchen in ihren Kanal, der von dem Fußteil der Befestigungseinrichtung gebildet wird.

Das ist eine wesentliche Montagehilfe beim Montieren des Scharniers in einer dünnen Wand, insbesondere bei Montieren von mehreren Scharnieren entlang einer

Schaltschranktür, wo zunächst die Scharnierbeschläge vormontiert werden, d.h. in entsprechende Öffnungen entlang der Anschlagkante des Türblattes eingesteckt werden, woraufhin sie durch die zur Selbsthemmung neigende Bereich nicht mehr herausfallen, wenn anschließend die Tür in dem Schrankrahmen, der entsprechende Scharnierteile bereits aufweist, eingesetzt wird. Nach Verbindung der beiden Scharnierteile kann dann durch Eindringen der Schraube nachträglich eine Verspannung erfolgen, so dass die Halteelemente für große Belastung geeignet sind, beispielsweise der Belastung durch eine Autotür oder dgl.

Durch das Lösen eines Scharniers durch eine Kegelschraube gemäß der dargestellten Ausführungsformen wird möglich, die zurückzuziehenden Klipselemente viel schmaler zu gestalten, als es bei Befestigungsteilen der Fall ist, die mittels eines Schlüssels geöffnet werden, der wie bei der eingangs genannten Druckschrift mittels eines Flachschlüssels zurückgezogen werden müssen, wobei die Flachschlüssellösung zu deutlich breiteren Plattenteilen führt.

Die Anordnung eines mit Zahnung versehenen Löseschlüssels hat den Nachteil, dass keine selbstarretierende Endstellung erreicht wird, so dass die gleichzeitige Montage von mehreren Beschlagelementen problematisch ist.

Die Ausführungsform gemäß den Fig. 11A, 11B, 12A und 12B dient als Befestigungselement zur Befestigung einer dünnen Wand an einer anderen, wobei dünne Wände entsprechend den erforderlichen Abmessungen rechteckige Durchbrüche aufweisen. Bei der Ausführungsform ist die kegelförmige Schraube im Kopfteil angeordnet, so dass eine Blindmontage gemäß Fig. 11A bis Fig. 16 denkbar ist.

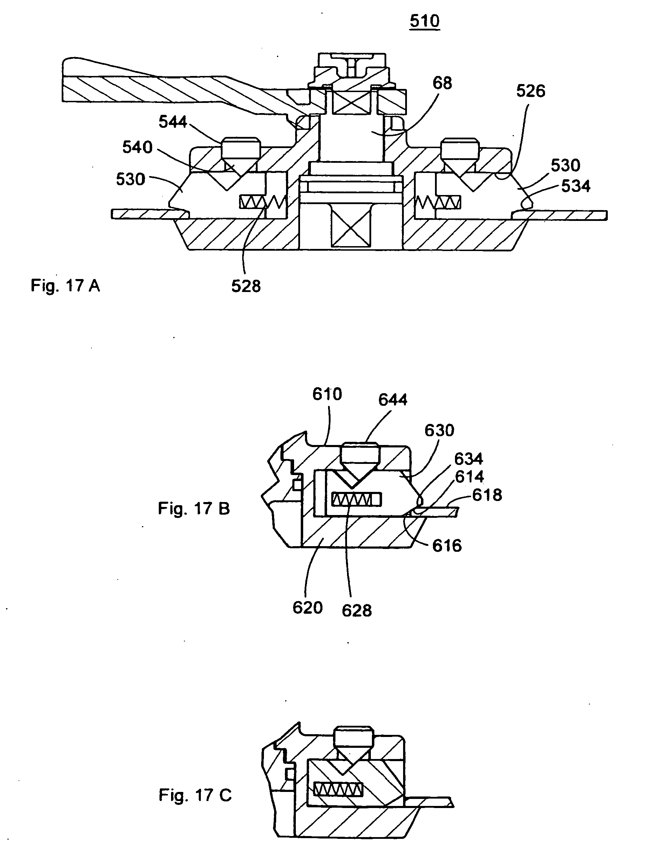

Gemäß einer in Fig. 17B dargestellten Weiterbildung der Befestigungseinrichtung ist die Kante 614 des Durchbruchs 616 der dünnen Wand 618, auf die die Schrägfläche 634 des Halte- oder Befestigungselementes 630 auftrifft, zur Anpassung an die Neigung der Schrägfläche abgeschrägt, um die Flächenpressung zu reduzieren.

Bei Hintereinanderanordnung der Befestigungselemente 530, siehe Fig. 17A, kann günstigerweise der zwischen ihnen liegende Freiraum zur Anordnung von Beschlageinrichtungen wie Betätigungswelle 68 eines Vorreiberverschlusses genutzt werden.

Bei selbsthemmenden Befestigungselementen, wie in Fig. 17A ist eine Verfahrensweise möglich, bei der die Schraube 544 mit konisch geformten Bereich 540 nur zum Lösen des Beschlages eingeschraubt wird. In diesem Falle kann die Schraube mit konisch geformten Bereich die Form eines Werkzeuges wie Schraubendreher mit angesetzter Schraube mit konischer Spitze 540 haben.

Andererseits kann eine verbleibende Schraube 544 dazu dienen, das unter dem Druck der sich am Hinterende des Kanals 576 abstützenden Feder 528 stehende Befestigungselement 530 am Herausfallen aus dem Kanal 526 zu hindern.

Bei Fig. 17B und 17C stützt sich die Feder an einem Vorsprung im Kanal nahe dessen Ausgang ab, drückt also das Befestigungselement nach innen.

Die Erfindung ist auch einsetzbar bei Befestigungselementen, die durch Schrägführung, z. B. mittels Stiften, die in schrägen Nuten in den Befestigungselementen laufen, Klemmwirkung erzeugen, siehe Fig. 36A bis 36E der eingangs genannten WO 2005/071199 A1.

### Gewerbliche Auswertbarkeit

Die Erfindung ist im Schaltschrankbau gewerblich auswertbar.

### Bezugszeichenliste:

- 10, 110, 510: Befestigungseinrichtung
- 12, 112: Beschlag, Scharnier
- 14, 114, 514: Kante, Wand
- 16, 116, 316, 616: Durchbruch, Einsenkung
- 18,118,318,618: dünne Wand, dicke Wand
- 20, 120, 620: Kopfteil
- 22, 122: äußerer Rand des Durchbruchs oder der Einsenkung
- 24, 124, 224, 424: Fußteil
- 26, 126, 526: Kanal
- 28, 128, 228, 328, 438, 538, 638: Feder(kraft)
- 30, 130, 230, 330, 430, 530, 630: Halteelement
- 32, 132: freies Ende, anderes Ende der Längserstreckung
- 34, 134, 234,334,534,634: äußere Schrägfläche; schräg angeordnete Spitzen
- 36: innere Seite der dünnen Wand
- 38, 138: Aufnahmeraum
- 40, 140, 540: konischer Fuß
- 42, 142: Ende
- 44, 144, 344, 444, 544, 644: Schraube
- 46, 146, 346: erste innere Schrägfläche
- 48, 148, 348: zweite innere Schrägfläche
- 50, 150: Freiraum
- 52, 152, 252: Gewindebohrung
- 54, 254: Neigungswinkel, Endschräge
- 56: Kraftkomponente
- 58: Hilfsplatte
- 60: Öffnung
- 62: erster Bereich
- 64: zweiter Bereich
- 66: zweite Wand
- 68: Betätigungswelle

## Patentansprüche

1. Verspannbar Befestigungseinrichtung (10, 110) zur Montage von Beschlägen (12, 112) oder anderen Gegenständen in einer sich gegenüber liegende Kanten (14, 114) oder Wände aufweisenden Durchbruch oder Einsenkung (16, 116), wie rechteckiger Durchbruch oder Ausnehmung (16, 116) in einer dünnen bzw. dicken Wand, wie Metallblech oder Holzbrett (18, 118), umfassend ein auf der einen, äußeren Seite der dünnen oder dicken Wand (18, 118) anzuordnenden, den äußeren Rand (22, 122) des Durchbruchs oder der Ansenkung (16, 116) überdeckendes Kopfteil (20, 120), von dem in montierter Stellung ein den Durchbruch (16) durchragender oder in die Einsenkung (116) hineinragender Fußteil (24,124) ausgeht, von dem in Richtung seiner Außenfläche in einem im Fußteil (24, 124) gebildet en Kanal (26, 126) zueinander gegen oder mit Federkraft verschiebliche Halteelemente (30, 130) vorspringen, deren freies Ende (32,132) eine Schrägfläche (34) zur spielfreien Abstützung des Fußteils (24) auf dem Rand oder Kante (14) des Durchbruchs (16) der anderen, inneren Seite (36) der dünnen Wand (14) oder deren freies Ende schräg angeordnete Spitzen (134) zum Eindringen in die Wandfläche (114) des Durchbruchs oder der Einsenkung (116) der dicken Wand (118) aufweist, wobei Fußteil (24, 124) und Halteelement (30, 130) getrennte Teile sind, wobei die Halteelemente (30, 130) durch eine einen konisch geformten Bereich aufweisende Schraube (44, 144) längs dem Kanal (26, 126) verschleblich sind, **dadurch gekennzeichnet, dass** die Halteelemente (30, 130) nebeneinander oder, alternativ, hintereinander angeordnete, in Verschiebenchtung langgestreckte Platten sind, die gemeinsam oder alternativ allein mit den Kanalwänden einen in Verschieberlchtung sich erstreckenden Aufnahmeraum (38, 138) für eine Druckfeder (28, 128) bilden, der sich bei Verschiebung der Platten (30, 130) aus ihrer Ruhestellung verkleinert und dadurch die Feder (28, 128) zusammendrückt, dass die einen konisch geformten Bereich aufweisende Schraube (44, 144) einen konisch geformten Fuß (40, 140) aufweist, und dass die Platten (30, 130) nahe ihrem jeweils einem Ende (34,134) jeweils eine mit dem konischen Fuß (40, 140) zusammenwirkende erste innere Schrägfläche (46, 146) aufweisen, die in Ruhestellung der Platten nur wenig zueinander versetzt sind, bei Verschiebung in die Arbeitsteilung sich jedoch voneinander entfernen.

2. Befestigungseinrichtung nach Anspruch 1, **dadurch gekennzeichnet, dass** bei einer dünnen Wand (18) die Platten (30) nahe ihrem jeweils anderen Ende der längserstreckung (32) jeweils eine mit der Kante (14) des Durchbruchs (16) in der dünnen Wand (18) zusammenwirkende äußere Schrägfläche (34) aufweisen, die in Ruhestellung der Platten (30) zueinander innerhalb des Kanales (26) des Fußteils (24) liegen, bei Verschiebung der Platten in die Arbeitstellung sich jedoch aus dem Kanal (26) des Fußteils (24) hinaus und voneinander weg bewegen.

3. Befestigungseinrichtung nach Anspruch 1, **dadurch gekennzeichnet, dass** bei einer dicken Wand (118) die Platten (130) nahe ihrem jeweiligen anderen Ende der Längserstreckung (132) ein oder mehrere nahe der Wand (114) des Durchbruchs oder der Einsenkung (116) mit der dicken Wand (118) zusammenwirkende äußere Schrägflächen oder Zähne (134) ausweisen, die in Ruhestellung der Platten (130) zueinander innerhalb des Kanals (126) des Fußteils (124) liegen, bei Verschiebung in die Arbeitsstellung sich jedoch aus dem Kanal (126) des Fußteils (124) hinaus und voneinander weg bewegen.

4. Befestigungseinrichtung nach Anspruch 1, 2 oder 3, **dadurch gekennzeichnet, dass** die Platten (30, 130) jeweils eine zweite innere Schrägfläche (48, 148) bildet, die sich derart an die erste innere Schrägfläche (46, 146) anschließt, dass beide Schrägflächen (46, 48, 146; 148) einen den konischen Bereich (40, 140) der Schraube (44, 144) aufnehmenden Freiraum (50, 150) bilden.

5. Befestigungseinrichtung nach einem der Anspruche 1 bis 4, **dadurch gekennzeichnet, dass** die Schraube (44, 144) eine Madenschraube ist.

## Claims

1. A securable fastening device (10, 110) for the mounting of fittings (12, 112) or other items in an opening or hollow (16, 116) having opposing edges (14, 114) or walls, such as rectangular opening or recess (16, 116) in a thin or thick wall, such as sheet metal or wooden board (18, 118), comprising a head part (20, 120) to be arranged on one outer side of the thin or thick wall (18, 118) and covering the outer border (22, 122) of the opening or the hollow (16, 116), from which head part (20, 120), in the mounted position, a base part (24, 124) projecting through the opening (16) or projecting into the hollow (116) proceeds, from which base part (24, 124) retaining elements (30, 130), which are displaceable relative to one another against or with spring force, protrude in the direction of its outer surface in a channel (26, 126) formed in the base part (24, 124), the free ends (32, 132) of which retaining elements (30, 130) have an inclined surface (34) for play-free support of the base part (24) on the border or edge (14) of the opening (16) of the other inner side (36) of the thin wall (14) or the free ends of which have obliquely arranged crests (134) for penetration into the wall surface (114) of the opening or the hollow (116) of the thick wall (118), wherein base part (24, 124) and retaining element (30, 130) are separate parts, wherein the retaining elements (30, 130) are displaceable along the channel (26, 126) by means of a screw (44, 144) having a conically shaped region, **characterised in that** the retaining elements (30, 130) are plates which are arranged next to one another or, alternatively, behind one another and which are longitudinally extended in the displacement direction and which jointly or alternatively solely with the channel walls form a receiving chamber (38, 138) extending in the displacement direction for a pressure spring (28, 128), which receiving space (38, 138) reduces in size in the case of displacement of the plates (30, 130) out of their idle position, and as a result compresses the spring (28, 128), that the screw (44, 144) having a conically shaped region has a conically shaped base (40, 140), and that the plates (30, 130) have close to their respective one end (34, 134) in each case a first inner inclined surface (46, 146) which interacts with the conical base (40, 140) and, in the idle position of the plates, are only slightly offset relative to one another, but move away from one another in the case of displacement into the operating position.

2. The fastening device according to Claim 1, **characterised in that**, in the case of a thin wall (18), the plates (30) have, close to their respective other end of the longitudinal extension (32), in each case an outer inclined surface (34) which interacts with the edge (14) of the opening (16) in the thin wall (18), which outer inclined surfaces lie, in the idle position of the plates (30), towards one another within the channel (26) of the base part (24), but, in the event of displacement of the plates into the operating position, move out of the channel (26) of the base part (24) and away from one another.

3. The fastening device according to Claim 1, **characterised in that**, in the case of a thick wall (118), the plates (130) have, close to their respective other end of the longitudinal extension (132), one or more outer inclined surfaces or teeth (134) which interact with the thick wall (118) close to the wall (114) of the opening or the hollow (116), and which are situated, in the idle position of the plates (130), at one another within the channel (126) of the base part (124), but, in the event of displacement into the operating position, move out of the channel (126) of the base part (124) and away from one another.

4. The fastening device according to Claim 1, 2 or 3, **characterised in that** the plates (30, 130) each form a second inner inclined surface (48, 148) which adjoins the first inner inclined surface (46, 146) such that both inclined surfaces (46, 48, 146, 148) form a cavity (50, 150) which receives the conical region (40, 140) of the screw (44, 144).

5. The fastening device according to one of Claims 1 to 4, **characterised in that** the screw (44, 144) is a headless screw.

## Revendications

1. Dispositif de fixation serrable (10, 110) pour le montage de ferrures (12, 112) ou d'autres objets dans un trou ou un creux (16, 116) présentant des bords opposés (14, 114) ou des parois opposés, tel qu'un trou ou un évidement rectangulaire (16, 116) dans une paroi mince ou, selon le cas, épaisse, telle qu'une tôle en métal ou une planche en bois (18, 118), comprenant une pièce de tête (20, 120) à disposer d'un côté, extérieur, de la paroi mince ou épaisse (18, 118), recouvrant le bord extérieur (22, 122) du trou ou du creux (16, 116), dont part une pièce de pied (24, 124) traversant, à l'état monté, le trou (16) ou pénétrant, à l'état monté, dans le creux (116), dont ressortent, dans le sens vers sa surface extérieure, dans un canal (26, 126) formé dans la pièce de pied (24, 124), des éléments de fixation (30, 130) pouvant être déplacés l'un vers l'autre contre ou par une force de ressort, dont l'extrémité libre (32, 132) présente une surface en biais (34) pour l'appui sans jeu de la pièce de pied (24) sur le pourtour ou le bord (14) du trou (16) de l'autre côté intérieur (36) de la paroi mince (14) ou dont l'extrémité libre présente des pointes (134) disposées en biais (134) pour la pénétration dans la surface (114) du trou ou du creux (116) de la paroi épaisse (118), la pièce de pied (24, 124) et l'élément de fixation (30, 130) étant des pièces séparées, les éléments de fixation (30, 130) étant mobiles le long du canal (26, 126) grâce à une vis (44, 144) présentant une zone de forme conique, **caractérisé**
**en ce que** les éléments de fixation (30, 130) sont des plaques disposées les unes à côté des autres ou, en variante, les unes derrière les autres, allongées dans le sens du déplacement, qui forment ensemble ou, en variante, seules, avec les parois du canal un espace de réception (38, 138) s'étendant dans le sens du déplacement pour un ressort de compression (28, 128), qui se réduit, lors du déplacement des plaques (30,130) à partir de sa position au repos et qui comprime ainsi le ressort (28, 128), en ce que la vis (44, 144) présentant une zone de forme conique présente un pied de forme conique (40, 140) et en ce que les plaques (30, 130) présentent, à proximité à chaque fois d'une de leurs extrémités (34, 134) à chaque fois une première surface en biais interne (46, 146) interagissant avec le pied conique (40, 140), lesdites surfaces en biais n'étant que légèrement décalées les unes par rapport aux autres dans la position de repos des plaques, mais s'éloignant les unes des autres lors du déplacement dans la position de travail.

2. Dispositif de fixation selon la revendication 1, **caractérisé en ce que** dans le cas d'une paroi mince (18) les plaques présentent (30), à proximité à chaque fois de l'autre extrémité de leur étendue longitudinale (32), à chaque fois une surface en biais (34) extérieure interagissant avec le bord (14) du trou (16) dans la paroi mince (18), lesdites surfaces en biais se situant, dans la position de repos des plaques (30) dans le canal (26) de la pièce de pied (24) mais lors du déplacement des plaques dans la position de travail, se déplaçant en sortant du canal (26) de la pièce de pied (24) et en s'écartant les unes des autres.

3. Dispositif de fixation selon la revendication 1, **caractérisé en ce que** dans le cas d'une paroi épaisse (118) les plaques (130) présentent, à proximité à chaque fois de l'autre extrémité de leur étendue longitudinale (132), une ou plusieurs surfaces en biais ou dents (134) extérieures à proximité de la paroi (114) du trou ou du creux (116) interagissant avec la paroi épaisse (118), lesdites surfaces en biais ou dents se situant, dans la position de repos des plaques (130) dans le canal (126) de la pièce de pied (124) mais lors du déplacement dans la position de travail, se déplaçant en sortant du canal (126) de la pièce de pied (124) et en s'écartant les unes des autres.

4. Dispositif de fixation selon la revendication 1, 2 ou 3, **caractérisé en ce que** les plaques (30, 130) forment à chaque fois une deuxième surface en biais intérieure (48, 148), qui se raccorde à la première surface en biais intérieure (46, 146) de manière telle que les deux surfaces en biais (46, 48, 146, 148) forment un espace libre (50, 150) recevant la zone conique (40, 140) de la vis (44, 144).

5. Dispositif de fixation selon l'une quelconque des revendications 1 à 4, **caractérisé**
**en ce que** la vis (44, 144) est une vis sans tête.
